## Europäisches Patentamt

(19) **European Patent Office**

**Office européen des brevets**

(11) Veröffentlichungsnummer: **0 196 492**

**B1**

(12) # EUROPÄISCHE PATENTSCHRIFT

(45) Veröffentlichungstag der Patentschrift:
12.07.89

(51) Int. Cl.⁴: **B 29 C 47/06,** B 29 C 47/02

(21) Anmeldenummer: **86102969.2**

(22) Anmeldetag: **06.03.86**

(54) **Verfahren und Einrichtung zur Erzeugung eines rohrförmigen Halbfabrikates aus Kunststoff für die Herstellung von Säcken.**

(30) Priorität: **15.03.85 CH 1169/85**

(43) Veröffentlichungstag der Anmeldung:
**08.10.86 Patentblatt 86/41**

(45) Bekanntmachung des Hinweises auf die Patenterteilung:
**12.07.89 Patentblatt 89/28**

(84) Benannte Vertragsstaaten:
**AT DE FR GB IT**

(56) Entgegenhaltungen:
**EP-A-0 017 996**
**EP-A-0 099 999**
**DE-A-1 504 588**
**DE-A-2 236 163**
**DE-B-1 504 557**
**FR-A-2 383 001**
**US-A-3 534 437**
**US-A-3 589 958**

(73) Patentinhaber: **Huemer, Franz X., Sonnenuhrgasse 4, A-1060 Wien (AT)**

(72) Erfinder: **Huemer, Franz X., Sonnenuhrgasse 4, A-1060 Wien (AT)**

(74) Vertreter: **Petschner, Goetz, Patentanwaltsbüro G. Petschner Seidengasse 18, CH- 8001 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die vorliegende Erfindung betrifft ein Verfahren zur Erzeugung eines rohrförmigen Halbfabrikates aus Kunststoff für die Herstellung von Säcken oder dgl.

Neben von auf Rundwebmaschinen aus Kunststoffbändchen hergestellten rohrförmigen Halbfabrikaten werden auch auf Extrusionsanlagen aus einem weichgemachten Thermoplast erzeugte rohrförmige Kunststoff-Folien zur Herstellung von Säcken, Tragtaschen u. dgl. Behältnisse herangezogen.

Letztere weisen zwar den Vorteil absoluter Dichtheit auf, besitzen aber eine nur sehr beschränkte Tragfähigkeit vergleichsweise etwa den aus Kunststoffbändchen gewobenen Behältnissen.

Es ist deshalb schon üblich, ein rohrförmiges Halbfabrikat aus einer Drei-Schichten-Folie zu bilden, bei der die mittlere Schicht höhere Schmelztemperatur aufweist als die beiden äusseren. Diese Schichten verkleben sich in warmweichem Zustand gegeneinander selbst. Durch die Haftung der äusseren Schichten am bereits verfestigten, zwischen sie eingeführten thermoplastischen Kunststoff höherer Schmelztemperatur und ihre Reibung an den Extrusionskanalwänden wird ein das Rekken gestattender Ausreisswiderstand erzeugt.

Durch die DE-A-2 236 163 ist es ferner bekannt geworden, anstelle der mittleren Folie nur noch Fäden (Bändchen) zu verwenden.

Solche bekannten Verfahren können aber nicht ohne weiteres für solche Halbfabrikate verwendet werden, wo die Bändchen zwischen Innenfolie und Aussenfolie eine Armierung bilden sollen, die nicht am Verbindungsprozess teilnehmen darf, um eine hohe Elastizität des Halbfabrikates zu gewährleisten.

Dies wird erfindungsgemäss nunmehr dadurch erreicht, dass die der Armierung dienenden Folienbändchen mit grösserem Abstand untereinander auf die innere rohrförmige Folie aufgebracht und das Ganze von einer äusseren rohrförmigen Folie überdeckt wird, wobei das innere und das äussere rohrförmige Extrudat durch den Lückenbereich der Armierung hindurch miteinander wärmeverbunden werden.

Diese Massnahmen erlauben nun einen fixierten Wandungsaufbau für die Behälter ohne die geringste Beeinträchtigung der Festigkeit der armierenden Folienbändchen, da diese am "Verschweissungsprozess" nicht teilnehmen.

Für diesen "Verschweissungsprozess" ist es vorteilhaft, wenn die rohrförmige Kunststoff-Folie im Bereich eines vorzugsweise heizbaren inneren Kalibrierungsringes armiert und mit der Armierung in warmweichem Zustand verbunden wird, bzw. wenn die innere armierte und die äussere rohrförmige Kunststoff-Folie im Bereich eines vorzugsweise heizbaren inneren Kalibrierungsringes in warmweichem Zustand miteinander verbunden werden.

Weiter betrifft die vorliegende Erfindung ein Behältnis, hergestellt nach dem erfindungsgemässen Verfahren.

Beispielsweise Ausführungsformen einer Einrichtung zur Durchführung des erfindungsgemässen Verfahrens bzw. eines nach diesem Verfahren hergestellten Behältnisses sind nachfolgend anhand der Zeichnung näher erläutert. Es zeigen:

Fig. 1   in schematischer, schaubildartiger und teilweise geschnittener Darstellung ein der Herstellung von Behältnissen dienendes, nach dem erfindungsgemässen Verfahren erzeugtes Halbfabrikat;

Fig. 2   in schematischer Teil-Darstellung eine Einrichtung zur Durchführung des erfindungsgemässen Verfahrens und zur Erzeugung des Halbfabrikates gemäss Fig. 1; und

Fig. 3   im Schnitt eine Ausführungsvariante eines nach dem erfindungsgemässen Verfahren erzeugten Halbfabrikats.

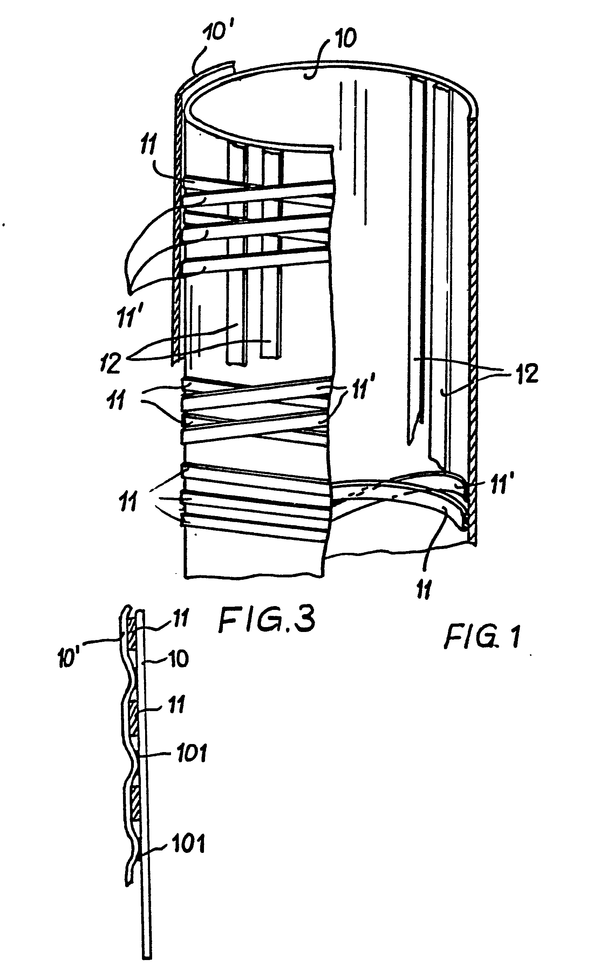

Zur Erläuterung des erfindungsgemässen Verfahrens zur Erzeugung eines rohrförmigen Halbfabrikates aus einem Kunststoff, welches die Herstellung von Säcken oder Tragtaschen oder dgl. von optimaler Dichtheit und praktisch beliebiger Tragfähigkeit gestattet, sei auf das in Fig. 1 veranschaulichte Halbfabrikat verwiesen, an welchem in unterschiedlichen Bereichen einige Varianten im strukturellen Aufbau dargestellt sind.

Ausgegangen wird von einem rohrförmigen Extrudat 10 aus einem weichgemachten Thermoplast, das im noch warmweichen Zustand oder ab Vorratsrolle wieder in warmweichen Zustand gebracht und dann mit Folienbändchen aus einem Kunststoff in Umfangsrichtung 11 bzw. 11' und/oder in Längsrichtung 12 armiert wird.

Vorzugsweise erfolgt die Armierung in einer Wärmezone, die gestattet, auch die der Armierung dienenden Kunststofffäden bzw. -bändchen 11, 11' und 12 kurzfristig weich zu machen, um zwischen den extrudierten rohrförmigen Folien 10 bzw. 10' und den Rundumbändchen 11 und 11' bzw. den Längsbändchen 12 eine innige Verbindung herbeizuführen.

Bei einer ersten Ausführungsform kann, wie in der Darstellung der Fig. 1 von unten nach oben bzw. von links nach rechts im Einzelnen veranschaulicht ist, die rohrförmige Kunststoff-Folie 10 kontinuierlich mit einem Folienbändchen 11 umwickelt sein.

Wie darüber in Fig. 1 veranschaulicht, kann die Kunststoff-Folie 10 zusätzlich von einem zweiten Folienbändchen 11' in Gegenrichtung zum ersten umwickelt sein, wodurch Kreuzungsstellen entstehen.

Für sich allein oder aber auch zusätzlich zum einen Rundumfolienbändchen 11 oder zu beiden 11 und 11' kann die rohrförmige Kunststoff-Folie 10 mit einer Mehrzahl, am Umfang vorzugsweise gleichmässig verteilter längsverlaufender Folienbändchen 12 verstärkt werden.

Wie Fig. 1 weiter zeigt, können die Rundumbändchen 11 und 11' und/oder die Längsbändchen 12 der Armierung innenwandig und/oder aussenwandig der rohrförmigen Kunststoff-Folie angebracht werden.

Weiter ist in Fig. 1 am oberen Teil der dargestellten Anordnung ersichtlich, dass eine weitere rohrförmige Kunststoff-Folie 10' auf die erste, armierte Anordnung 10, 11, 11', 12 aufgebracht wird.

Grundsätzlich ist es möglich und liegt im Bereich des Erfindungsgedankens, mehrere Schichten rohrförmiger Kunststoff-Folien 10, 10' sowie Rundumbändchen 11 und 11' und/oder Längsbändchen 12 der Armierung miteinander zu verbinden.

Bei einer Ausführungsvariante gemäss Fig. 3 können beispielsweise die der Armierung dienenden Folienbändchen 11 mit grösserem Abstand auf die hier innere rohrförmige Folie 10 aufgebracht und das Ganze von einer äusseren rohrförmigen Folie 10' überdeckt werden, wobei hier das innere 10 und das äussere rohrförmige Extrudat 10' durch den Lückenbereich 101 der Armierung 11 hindurch miteinander wärmeverbunden werden.

Vorzugsweise wird dabei für das innere und das äussere rohrförmige Extrudat 10 bzw. 10' ein Material von niedrigerem Schmelzpunkt als der Schmelzpunkt des Materials der Armierung 11 verwendet.

Auf diese Weise wird gewährleistet, dass die Armierung 11 am "Verschweissungsprozess" nicht teilnimmt und so seine volle Festigkeit beibehält.

Ein auf diese vorbeschriebens Weise erzeugtes Halbfabrikat wird entsprechend seiner kontinuierlichen Zulieferung in einem nachfolgenden Arbeitsprozess abgelängt und dann bodenseitig abgenäht oder gerafft und geknotet oder verklebt oder auf andere Weise zur Herstellung von Behältnissen bearbeitet.

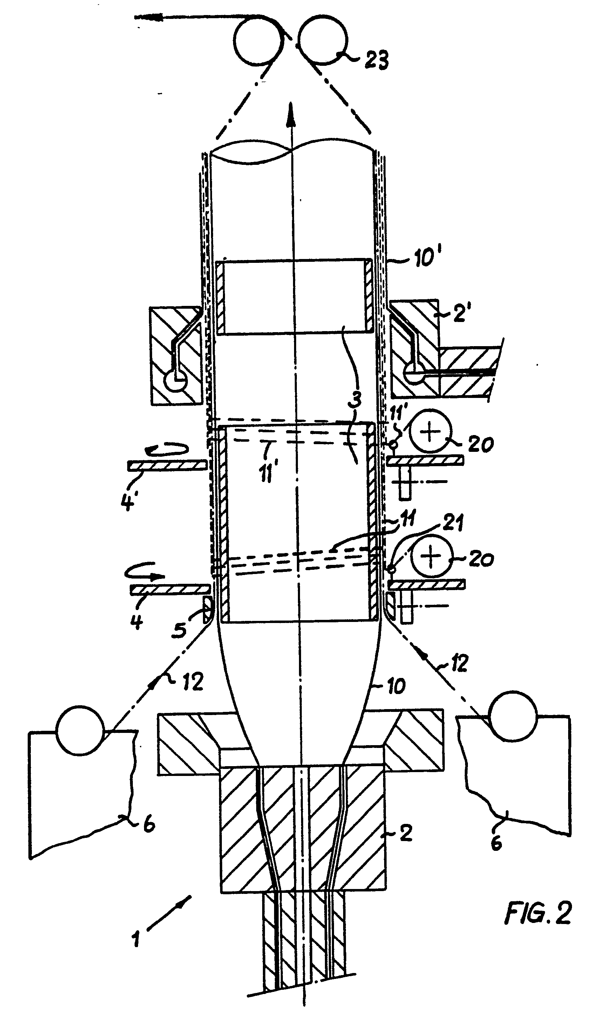

Um das erfindungsgemässe Verfahren rationell durchführen zu können, ist hier eine vorzugsweise mehrstufige Einrichtung gemäss Fig. 2 vorgesehen, die eine Erzeugung aller anhand von Fig. 1 und 3 vorbeschriebenen Ausführungsformen gestattet.

Entsprechend ist eine Extrusionsanlage 1 mit hier einer ersten Ringdüse 2 zur Erzeugung einer ersten rohrförmigen Kunststoff-Folie 10 sowie einer zweiten Ringdüse 2' zur Erzeugung einer zweiten rohrförmigen Kunststoff-Folie 10' vorgesehen.

Extrusionsanlagen zur Erzeugung rohrförmiger folienartiger Extrudate aus einem weichgemachten Thermoplast sind bekannt und bedürfen hier keiner weiteren Erläuterung.

Diese Ringdüsen 2 bzw. 2' sind vor bzw. im Bereich eines gegebenenfalls heizbaren inneren Kalibrierungsringes 3 angeordnet. Dieser Ring 3 ist hier von einer ersten, beispielsweise im Gegenuhrzeigersinn umlaufend angetriebenen Faden- oder Bändchenverlegervorrichtung 4 umgeben, um die rohrförmige Kunststoff-Folie 10 mit den Bändchen 11 armieren zu können. Soll hierbei die Armierung innenseitig der Folie 10 erfolgen, muss die Extruder-Düse 2 der genannten Bändchenverlegervorrichtung 4 nachgesetzt werden.

Für eine Armierung mit einem weiteren Rundumbändchen 11' ist eine weitere Bändchenverlegervorrichtung 4' vorgesehen, welche vorzugsweise im nun Uhrzeigersinn angetrieben wird. In geeigneter, hier nicht näher gezeigten Weise tragen die Bändchenverlegervorrichtungen 4 und 4' Vorratsspulen 20, von denen über Fadenösen 21 die Bändchen 11 bzw. 11' abgezogen werden.

Für eine Längsarmierung ist der innere Kalibrierungsring 3 anlaufseitig von einem äusseren Führungsring 5 zur kontinuierlichen Heranführung der Längsbändchen 12 an die Kunststoff-Folie 10 respektive an den Kalibrierungsring 3 umgeben. Vorzugsweise werden dabei die Längsbändchen 12 von einem üblichen Spulengatter 6 abgezogen.

Wie ohne weiteres erkennbar, gestattet eine solche Einrichtung die Durchführung aller vorbeschriebenen Verfahrensschnitte einzeln oder miteinander.

Der Abzug des so erzeugten Halbfabrikates erfolgt kontinuierlich und in üblicher Weise, wofür das erzeugte Rundgebilde vorzugsweise zwischen Abzugswalzen 23 zusammengelegt und von diesen weitergeführt wird, etwa direkt zu einer Konfektionsmaschine oder dgl. Entsprechend dieser Abzugsgeschwindigkeit werden auch die Rundumbändchen 11 und 11' bzw. die Längsbändchen 10 abgezogen, wobei sich für erstere die in Fig. 1 gezeigte gegenläufige Neigungslage an der Folie ergibt.

Selbstverständlich sind im Rahmen des vorbeschriebenen Verfahrens und der Einrichtung eine Reihe von Modifikationen denkbar, ohne dabei den Erfindungsgedanken zu verlassen. Insbesondere sind neben den beschriebenen Folienbändchen jede Art von geeigneten Fadenformen denkbar, wie Filamente, Garne, Fäden und dgl. Weiter kann beispielsweise der eine oder andere gegebenenfalls heizbare innere Kalibrierungsring gegebenenfalls auch kühlbar sein.

Beim Abziehen der zu umwickelnden inneren Folie von einer Vorratsrolle ist der Vorteil gegeben, dass jederzeit für einen Spulenwechsel am Umwickelungsaggregat unterbrochen werden kann, was beim Umwickeln unmittelbar nach dem Extrudieren schwieriger ist.

## Patentansprüche

1. Verfahren zur Erzeugung eines rohrförmigen Halbfabrikates aus Kunststoff für die Herstellung von Säcken oder dgl., wobei ein inneres rohrförmiges Extrudat aus einem Thermoplast mit Folienbändchen aus einem Kunststoff oder dgl. in seiner Umfangsrichtung und/oder in seiner Längsrichtung armiert und mindestens ein weiteres rohrförmiges Extrudat aus einem Thermoplast auf die erste, armierte rohrförmige Kunststoff-Folie aufgebracht wird, dadurch gekennzeichnet, dass die der Armierung dienenden Folienbändchen (11) mit grösserem Abstand untereinander auf die innere rohrförmige Folie (10) aufgebracht und das Ganze von einer äusseren rohrförmigen Folie (10') überdeckt wird, wobei das innere (10) und das äussere rohrförmige Extrudat (10') durch den Lückenbereich (101) der Armierung (11) hindurch miteinander wärmeverbunden werden.

2. Verfahren nach Anspruch 1, dadurch gekennzeichnet, dass für das innere (10) und das äussere rohrförmige Extrudat (10') ein Material von niedrigerem Schmelzpunkt als der Schmelzpunkt des Materials der Armierung (11) verwendet wird.

3. Verfahren nach Anspruch 1, dadurch gekennzeichnet, dass das innere rohrförmige Extrudat (10) direkt nach dem Extrudieren oder ab Rolle armiert wird.

4. Verfahren nach Anspruch 1, dadurch gekennzeichnet, dass die innere rohrförmige Kunststoff-Folie (10) im Bereich eines vorzugsweise heizbaren inneren Kalibrierungsringes (3) armiert und mit der Armierung (11) in warmweichem Zustand verbunden wird.

5. Verfahren nach Anspruch 1, dadurch gekennzeichnet, dass die innere armierte (10) und die äussere rohrförmige Kunststoff-Folie (10') im Bereich eines vorzugsweise heizbaren inneren Kalibrierungsringes (3) in warmweichem Zustand miteinander verbunden werden.

6. Behältnis, hergestellt nach dem Verfahren nach den Ansprüchen 1 bis 5.

## Claims

1. A process for the production of a tubular semimanufactured article made from plastic (synthetic resin) for the fabrication of sacks and other receptacles, said process comprising the steps of: extruding an inner tubular extrudate of a thermoplastic film; applying to said extrudate reinforcing tapes or strands of a synthetic resin or other material around the circumference and/or along the length thereof; extruding at least one second tubular extrudate of thermoplastic film around said first tubular extrudate and said reinforcement layer, characterized in that said strands of film (11), serving as reinforcement, are applied with large gaps between one another to said inner tubular film (10), and the assembly is covered by an outer tubular film (11'); and, while said inner (10) and said outer tubular extrudate (10') are in a soft and warm condition, bonding them directly to one another through said gaps (101) in said reinforcement (11).

2. The process as defined in claim 1, wherein for said inner (10) and said outer (10') tubular extrudates, a material is employed that has a lower melting point than that of the material employed for said reinforcement (11).

3. The process as defined in claim 1, wherein said inner tubular extrudate (10) is reinforced directly after extrusion or from the delivery roll.

4. The process as defined in claim 1, wherein said inner tubular plastic film (10) is reinforced and bonded to said reinforcement (11) in a soft and warm state in the vicinity of a heatable inner calibrating ring (3).

5. The process as defined in claim 1, wherein said inner reinforced (10) and said outer tubular plastic extrudate (10') are bonded together in a soft and warm state in the vicinity of a heatable inner calibrating ring (3).

6. A receptacle manufactured according to the claims 1 through 5.

## Revendications

1. Procédé de production d'un produit semi-fini de forme tubulaire en matière plastique, pour la fabrication de sacs ou similaires, un produit d'extrusion intérieur de forme tubulaire se composant d'un produit thermoplastique étant armé dans sa direction périphérique et/ou longitudinale au moyen de bandelettes de film composées d'une matière plastique ou similaire et au moins un autre produit d'extrusion de forme tubulaire se composant d'un produit thermoplastique étant appliqué sur la première feuille de matière plastique, de forme tubulaire et armée, caractérisé en ce que les bandelettes de feuille (11) servant à l'armature sont appliquées avec un écartement réciproque important sur la feuille intérieure (10) de forme tubulaire, l'ensemble étant recouvert d'une feuille de forme tubulaire extérieure (10') et les produits d'extrusion de forme tubulaire intérieur (10) et extérieur (10') étant liés par effet thermique par la zone d'intervalle (101) de l'armature (11).

2. Procédé selon la revendication 1, caractérisé en ce qu'on utilise pour produit d'extrusion de forme tubulaire intérieur (10) et extérieur (10') une matière à point de fusion plus bas que le point de fusion du matériau de l'armature (11).

3. Procédé selon la revendication 1, caractérisé en ce que le produit d'extrusion de forme tubulaire intérieur (10) est armé directement après extrusion ou à partir d'un rouleau.

4. Procédé selon la revendication 1, caractérisé en ce que la feuille de matière plastique intérieure (10) de forme tubulaire est armée dans la zone d'un anneau de calibrage (3) intérieur de préférence chauffable et relié à l'armature (11) à l'état ramolli par chauffage.

5. Procédé selon la revendication 1, caractérisé en ce que la feuille de matière plastique intérieure armée (10) et extérieure de forme tubulaire (10') sont reliées ensemble à l'état ramolli par chauffage dans la zone d'un anneau de calibrage (3) intérieur, de préférence chauffable.

6. Récipient fabriqué selon le procédé des revendications 1 à 5.

10'
10
11
11'
12
12
11'
11
11'
11
11
11'

**FIG.3**

11
10'
10
11
101
101

**FIG. 1**

FIG.2